(19) Europäisches Patentamt
European Patent Office
Office européen des brevets

(11) **EP 3 811 448 B1**

(12) **EUROPÄISCHE PATENTSCHRIFT**

(45) Veröffentlichungstag und Bekanntmachung des Hinweises auf die Patenterteilung:
**27.04.2022   Patentblatt 2022/17**

(21) Anmeldenummer: **19725052.5**

(22) Anmeldetag: **10.05.2019**

(51) Internationale Patentklassifikation (IPC):
***H01M 8/248*** *(2016.01)*

(52) Gemeinsame Patentklassifikation (CPC):
**H01M 8/248; H01M 8/0438; H01M 8/04746;**
H01M 2250/20; Y02E 60/50; Y02T 90/40

(86) Internationale Anmeldenummer:
**PCT/EP2019/062008**

(87) Internationale Veröffentlichungsnummer:
**WO 2019/242931 (26.12.2019 Gazette 2019/52)**

(54) **BRENNSTOFFZELLENSTAPEL**

FUEL CELL STACK

EMPILEMENT DE PILES À COMBUSTIBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2018   DE 102018210176**

(43) Veröffentlichungstag der Anmeldung:
**28.04.2021   Patentblatt 2021/17**

(73) Patentinhaber:
• **Audi AG**
  **85045 Ingolstadt (DE)**
• **VOLKSWAGEN AG**
  **38440 Wolfsburg (DE)**

(72) Erfinder:
• **JILANI, Adel**
  **Burnaby, British Columbia V5J 5J8 (CA)**
• **SANKAR VOOSANI KRISHNA, Siva**
  **Burnaby, British Columbia V5J 5J8 (CA)**

(74) Vertreter: **Hentrich Patent- & Rechtsanwälte PartG mbB**
  **Syrlinstraße 35**
  **89073 Ulm (DE)**

(56) Entgegenhaltungen:
**WO-A1-2011/098276      DE-A1-102008 026 858**
**US-A1- 2009 280 359**

**Beschreibung**

Brennstoffzellen nutzen die chemische Umsetzung eines Brennstoffs mit Sauerstoff zu Wasser zum Erzeugen elektrischer Energie. Hierfür weisen Brennstoffzellen eine Membran-Elektroden-Anordnung (MEA - *membrane electrode assembly*) mit einer Membran-Elektroden-Einheit auf.

Die Membran-Elektroden-Einheit wird durch eine protonenleitende Membran, PEM, gebildet, an der beidseitig katalytische Elektroden angeordnet sind. Dabei trennt die Membran den der Anode zugeordneten Anodenraum und den der Kathode zugeordneten Kathodenraum voneinander und isoliert diese elektrisch. Auf den nicht der Membran zugewandten Seiten der Elektroden können zudem Gasdiffusionslagen angeordnet sein.

Im Betrieb der Brennstoffzelle wird ein wasserstoffhaltiger Brennstoff der Anode zugeführt, an der eine elektrochemische Oxidation von $H_2$ zu $H^+$ unter Abgabe von Elektronen erfolgt. Über die elektrolytische Membran erfolgt ein wassergebundener oder wasserfreier Transport der Protonen $H^+$ aus dem Anodenraum in den Kathodenraum. Die an der Anode bereitgestellten Elektronen werden über eine elektrische Leitung der Kathode zugeleitet.

Der Kathode wird ein sauerstoffhaltiges Betriebsmedium zugeführt, sodass dort eine Reduktion von $O_2$ zu $O_2^-$ unter Aufnahme der Elektronen erfolgt. Diese Sauerstoffanionen reagieren im Kathodenraum mit den über die Membran transportierten Protonen unter Bildung von Wasser.

Ein Brennstoffzellenstapel ist in der Regel durch eine Vielzahl in einem Stapel (*stack*) in Stapelrichtung übereinander angeordneter MEA gebildet, deren elektrische Leistungen sich addieren. Zwischen den Membran-Elektroden-Anordnungen sind üblicherweise Bipolarplatten angeordnet, die eine Versorgung der einzelnen MEA mit den Reaktanten und einer Kühlflüssigkeit sicherstellen sowie als elektrisch leitfähiger Kontakt zu den Membran-Elektroden-Anordnungen fungieren.

Zwischen den Membran-Elektroden-Einheiten und den Bipolarplatten sind Dichtungen angeordnet, um die Anoden- und Kathodenräume nach außen abzudichten und ein Austreten der Betriebsmedien aus dem Stapel zu verhindern. Diese Dichtungen sind auf den Membran-Elektroden-Einheiten, den Bipolarplatten oder diesen beiden Komponenten vorgesehen.

Zum dauerhaften Abdichten des Stapels und zum Gewährleisten des elektrischen Kontakts zwischen Bipolarplatten und Membran-Elektroden-Anordnungen wird der Brennstoffzellenstapel vor der Inbetriebnahme verpresst. Ferner werden Zugelemente eingesetzt, um den Brennstoffzellenstapel auch während des Betriebs zu verpressen.

Aus dem Stand der Technik sind verschiedene Zugelemente bekannt. Beispielsweise können zwei an den Enden des Brennstoffzellenstapels angeordnete Endplatten mittels Zugelementen verbunden werden. Durch Einleiten von Zugkräften über die Zugelemente in die Endplatten wird der Brennstoffzellenstapel zusammengepresst. Als Zugelemente werden beispielsweise Gewindestäbe, Zuganker, Ketten oder dergleichen eingesetzt.

Ebenfalls bekannt ist die Verwendung von gespannten streifen- oder bandförmigen elastischen Spannelementen, die entweder mit den Endplatten verbunden sind oder den Stapel in zumindest einem Querschnitt (in Stapelrichtung) zumindest teilweise umlaufen. Hinsichtlich der Ausgestaltung und Befestigungsmöglichkeiten derartiger elastischer Spannelemente (Zugelemente) wird beispielsweise auf die EP 1 870 952 A2, die DE 10 2012 000 266 A1 und die WO 2012/065890 A1 verwiesen, auf deren Inhalte hiermit vollumfänglich Bezug genommen wird. Ein Nachspannen der elastischen Bandelemente ist dabei jedoch in der Regel nicht vorgesehen. Des Weiteren offenbaren DE 10 2008 026858 A1, US 2009/280359 A1 und WO 2011/098276 A1 Brennstoffzellenstapel mit Spannelementen.

Insbesondere in den aktiven Bereichen des Brennstoffzellenstapels beziehungsweise der MEAs kann es zu betriebsbedingten Höhenänderungen kommen, die beispielsweise mit der Temperatur und dem Feuchtegehalt des Brennstoffzellenstapels variieren können. Man spricht auch davon, dass der Stapel atmet. Bei der Verwendung elastischer Spannelemente kann zudem die Elastizität dieser Spannelemente mit der Zeit abnehmen. Insbesondere bei metallischen Spannelementen, die den Brennstoffzellenstapel ringförmig umlaufen und somit mehrere deutliche Knicke aufweisen, kommt es insbesondere im Bereich dieser Umbiegungen zum Längen der Spannelemente. Unabhängig von den Höhenänderungen des Brennstoffzellenstapels und der Alterung der Spannelemente muss stets eine ausreichende Kompression des Stapels gewährleistet werden, insbesondere um die Dichtwirkung der eingesetzten Dichtungen zu garantieren. Aus dem Stand der Technik sind daher bereits Mittel bekannt, mit denen versucht werden soll, die Kompression eines Brennstoffzellenstapels dauerhaft zu gewährleisten.

Die DE 10 2010 007 979 A1 offenbart einen Brennstoffzellenstapel mit zwischen zwei Endplatten angeordneten Brennstoffzellen und mindestens einem die Endplatten verbindenden Verspannungsmittel zum Ausüben einer Zugkraft. Zwischen dem Verspannungsmittel und zumindest einer der Endplatten ist ein reibungsminderndes Umlenkmittel angeordnet. Eine Höhenänderung des Stapels soll durch zwischen einer Endplatte und einer Kompressionsplatte angeordnete komprimierte Federelemente ausgeglichen werden. Gemäß diesem Stand der Technik sollen Spannungsspitzen aufgrund der Ausdehnung des Stapels durch elastische Elemente vermieden werden. Ein anfängliches Überspannen der elastischen Elemente soll eine Höhenänderung des Stapels sogar zum Teil vermeiden können. Die elastischen Elemente unterliegen jedoch selbst einer Alterung und zumindest insofern ist diese passive Möglichkeit zur Einstellung der Kompressionskraft nachteilig.

Die DE 10 2010 007 981 A1 offenbart einen Brennstoffzellenstapel mit zwischen zwei Endplatten angeordneten Brennstoffzellen und mindestens einem die Endplatten verbindenden Verspannungsmittel zum Ausüben einer Zugkraft. Zwischen dem Verspannungsmittel und zumindest einer der Endplatten ist ein Befestigungselement angeordnet, das als Exzenterelement ausgebildet ist oder ein Exzenterelement enthält. Durch Drehen des Befestigungselements soll so ein Abstand zwischen den Endplatten verändert und somit eine Zugkraft zwischen den Endplatten angepasst werden. Das Kompressionssystem gemäß diesem Stand der Technik hat einen komplizierten Aufbau, welches speziell angepasste Endplatten und/oder Verspannungsmittel erfordert und ist nicht für umlaufende Spannelemente geeignet.

Bei ferner bekannten Lösungen mit zwischen den Endplatten und anderen Stapelkomponenten, beispielsweise Kompressionsplatten, angeordneten komprimierten Federelementen, sind in der Regel Vertiefungen in den Endplatten vorgesehen, um die Federelemente aufzunehmen. Hierfür ist zusätzlicher Bauraum im Brennstoffzellenstapel notwendig. Ferner erhöhen die damit verbundenen lokalen Schwächungen der Endplatten deren Neigung zu Deformation und Beschädigung unter einwirkenden Druck- oder Zugkräften.

Der Erfindung liegt nun die Aufgabe zugrunde, die Nachteile des Standes der Technik zu überwinden und eine Lösung zur dauerhaften Kompression von Brennstoffzellenstapeln bereitzustellen, welche platzsparend in bestehende Brennstoffzellenstapel integrierbar ist und den Erhalt einer Kompressionszugkraft auch über ausgedehnte Zeiträume sicher gewährleistet.

Diese Aufgabe wird gelöst durch einen Brennstoffzellenstapel mit einer ersten Endplatte und einer zweiten Endplatte und einer Vielzahl von in Stapelrichtung zwischen den zwei Endplatten angeordneten Brennstoffzellen. Ferner weist der Brennstoffzellenstapel zumindest ein in Stapelrichtung zwischen den Endplatten gespanntes elastisches Spannelement auf.

Der erfindungsgemäße Brennstoffzellenstapel weist ferner zumindest eine drehbare Montagewelle auf. Bevorzugt ist die Montagewelle in den Brennstoffzellenstapel integriert und besonders bevorzugt drehbar in oder an dem Brennstoffzellenstapel gelagert. Erfindungsgemäß ist zumindest ein Endabschnitt, insbesondere ein erster Endabschnitt, von zumindest einem Spannelement an der Montagewelle fixiert. Der Endabschnitt ist bevorzugt kraft-, stoff- und/oder formschlüssig an der Montagewelle fixiert, um Relativbewegungen zwischen Endabschnitt und Montagewelle zu verhindern.

Erfindungsgemäß ist die drehbare Montagewelle über zumindest eine gespannte Torsionsfeder mit dem Brennstoffzellenstapel verbunden. Mit anderen Worten ist die Torsionsfeder an der Montagewelle und zusätzlich an dem Brennstoffzellenstapel fixiert. Bevorzugt ist ein erstes Ende der Torsionsfeder, beispielsweise ein erstes Ende eines zur Feder gewickelten Drahts, an der Montagewelle und ein zweites Ende der Torsionsfeder, beispielsweise ein zweites Ende des zur Feder gewickelten Drahts, an dem Brennstoffzellenstapel befestigt. Somit wird die Federspannung beziehungsweise das Drehmoment der gespannten Torsionsfeder auf die drehbar gelagerte Montagewelle übertragen. Bevorzugt ist die Torsionsfeder so mit der Montagewelle verbunden, dass ein von der Feder ausgeübtes Drehmoment einer von dem Spannelement ausgeübten Zugspannung entgegengesetzt ist.

Durch die Fixierung des Endabschnitts zumindest eines Spannelements an der Montagewelle ist die Zugspannung des zumindest einen Spannelements durch eine Drehung der Montagewelle einstellbar. Die Montagewelle erlaubt somit vorteilhaft ein Nachspannen des zumindest einen Spannelements durch Drehen der Montagewelle. Durch die Anordnung der gespannten Torsionsfeder zwischen Montagewelle und Brennstoffzellenstapel wird vorteilhaft ein gerichtetes, der Zugspannung des Spanelements entgegengesetztes Drehmoment auf die Montagewelle übertragen. Vorteilhaft führt die Feder somit bei Nachlassen der Zugspannung des Spannelements, beispielsweise aufgrund von alterungsbedingtem Längen des Spannelements, zum Nachspannen des Spannelements mittels des Drehmoments der Torsionsfeder.

Der erfindungsgemäße Brennstoffzellenstapel ist somit vorteilhaft dazu ausgestattet, eine Kompression des Brennstoffzellenstapels über die mittels Spannelementen verspannten Endplatten auch über einen ausgedehnten Zeitraum sicher zu gewährleisten. Besonders vorteilhaft erfolgt ein automatisches Nachspannen eines gelängten Spannelements durch Aufwickeln des Spannelements auf die Montagewelle mittels in zumindest einer Torsionsfeder gespeicherter, potentieller Energie. Das Aufwickeln erfolgt dabei nur, wenn die Zugspannung des Spannelements das Drehmoment der Torsionsfeder unterschreitet. Durch Drehen der Montagewelle in eine erste Drehrichtung wird das zumindest eine Spannelement zwischen seinen Endabschnitten effektiv verkürzt und dadurch die von diesem erzeugte Zugkraft erhöht.

Ferner vorteilhaft ist der erfindungsgemäße Brennstoffzellenstapel dazu ausgebildet, ein Spannelement durch Drehen der Montagewelle in eine entgegengesetzte zweite Drehrichtung wieder von der Montagewelle abzuwickeln. Das Drehen in die zweite Drehrichtung erfolgt dabei in Richtung der Zugspannung des Spannelements und somit entgegen eines von der Torsionsfeder ausgeübten Drehmoments. Das Abwickeln erfolgt somit nur, wenn die Zugspannung das Drehmoment überschreitet. Durch das Drehen in die zweite Drehrichtung wird das Spannelement zwischen seinen Fixpunkten effektiv gelängt und dadurch die von diesem erzeugte Zugkraft verringert. Mit dem erfindungsgemäßen Brennstoffzellenstapel kann somit vorteilhaft verhindert werden, dass eine von den Spannelementen erzeugte Kompressionszugkraft einen bestimmten, durch das Drehmoment der zumindest einen Torsionsfeder bestimmten Grenzwert überschreitet. Somit kann durch Nachlassen der Spannelemente eine Beschädigung von Stapelkomponenten, beispielsweise von porösen Keramiklagen, bei einem betriebsbedingten Anstieg der Stapelhöhe des Brennstoffzellenstapels zuverlässig verhindert werden.

Bevorzugt ist auch ein zweiter Endabschnitt des zumindest einen Spannelements an dem Brennstoffzellenstapel fixiert. Der zweite Endabschnitt ist dabei verschieden von dem ersten Endabschnitt und jedes Spannelement weist einen ersten und einen zweiten Endabschnitt auf. Der zweite Endabschnitt ist bevorzugt an derselben Montagewelle fixiert, wie der erste Endabschnitt. Ein Drehen der Montagewelle führt somit vorteilhaft zu einer doppelt so starken Verkürzung und somit zur Zugkraftsteigerung im Vergleich zu nur einem befestigten Endabschnitt. Alternativ bevorzugt ist der zweite Endabschnitt des Spannelements an einer weiteren Montagewelle fixiert. Die weitere Montagewelle ist dabei bevorzugt ebenfalls über zumindest eine gespannte Torsionsfeder mit dem Brennstoffzellenstapel verbunden. Somit kann das Spannelement vorteilhaft beidseitig und somit besonders gleichmäßig und exakt nachgespannt werden. Ebenfalls bevorzugt ist der zweite Endabschnitt an einem beliebigen anderen Abschnitt des Brennstoffzellenstapels fest fixiert. Dies stellt eine besonders einfache Ausführungsform der Erfindung dar.

Bevorzugt ist das elastische Spannelement des Brennstoffzellenstapels im Hook'schen Bereich gespannt. Ein Nachspannen des Spannelements erfolgt bevorzugt in Stapelrichtung (S) des Brennstoffzellenstapels und dabei bevorzugt stets entlang der Spannrichtung der Spannelemente. Besonders bevorzugt ist durch Drehung der Montagewelle die Federkraft der zumindest einen Torsionsfeder und somit die Zugspannung des zumindest einen Spannelements einstellbar. Bevorzugt wird die Stapelkompression durch Anordnung von gespannten Torsionsfedern bestimmter Federkraft auch lokal eingestellt.

Ebenfalls bevorzugt ist das zumindest eine Spannelement, bevorzugt jedes Spannelement des Brennstoffzellenstapels, über eine Mehrzahl von mit der zumindest einen Montagewelle verbundenen Torsionsfedern gespannt. Dazu ist das zumindest eine Spannelement an einer Montagewelle fixiert und die Mehrzahl gespannter Torsionsfedern an dieser Montagewelle und dem Brennstoffzellenstapel fixiert. So addieren sich die von der Mehrzahl Torsionsfedern aufgebrachten Federkräfte zu einer Gesamtfederkraft. Somit können vorteilhaft auch große durch die Spannelemente erzeugte Kompressionszugspannungen durch die Torsionsfedern gesichert werden.

In einer bevorzugten Ausführungsform verläuft die zumindest eine Montagewelle entlang eines Kantenbereichs der ersten oder zweiten Endplatte. Der Kantenbereich dieser Endplatte bezeichnet dabei bevorzugt einen Übergang von einer ersten, nach außen weisenden Oberfläche der Endplatte und einer zweiten, zur ersten Oberfläche senkrechten Oberfläche der Endplatte. Die zweite Oberfläche erstreckt sich dabei bevorzugt entlang der Stapelrichtung des Brennstoffzellenstapels beziehungsweise weist einen zur Stapelrichtung senkrechten Normalenvektor auf. In dieser Ausführungsform verlaufen die Spannelemente vorteilhaft nicht über Kanten des Brennstoffzellenstapels hinweg. Gemäß dieser Ausführungsform ist die zumindest eine Montagewelle ferner bevorzugt über die zumindest eine gespannte Torsionsfeder mit der Endplatte verbunden, entlang deren Kantenbereich sie verläuft. Vorteilhaft kommt ein Brennstoffzellenstapel somit durch Hinzufügen entsprechend ausgestatteter Endplatten einfach in den Nutzen der Vorteile der Erfindung.

Besonders bevorzugt ist die Montagewelle im Bereich eines Kantenbereichs der Endplatte abschnittsweise durch die Endplatte hindurch geführt. Bei einer zylinderförmigen Montagewelle weist die Endplatte in dieser Ausführungsform bevorzugt eine zylinderförmige Bohrung auf. Vorteilhaft ist somit eine einfache drehbare Lagerung der Montagewelle realisierbar. Ferner bevorzugt weist die Endplatte gemäß dieser Ausführungsform Aussparungen beziehungsweise Rücksprünge des Kantenbereichs auf, in denen die Montagewelle freiliegt. Besonders bevorzugt ist das zumindest eine Spannelement im Bereich der Aussparung an der Montagewelle befestigt. Dies erleichtert vorteilhaft das Aufwickeln des Spannelements auf die Montagewelle. Ebenfalls bevorzugt ist die zumindest eine Torsionsfeder in der Aussparung mit der Montagewelle verbunden und ferner bevorzugt mit der Endplatte verbunden.

In einer ferner bevorzugten Ausführungsform handelt es sich bei der zumindest einen Torsionsfeder um eine Schraubenfeder, besonders bevorzugt um eine aus Draht oder Federstahl spiralig gewickelte Schraubenfeder. Ebenfalls bevorzugt handelt es sich bei der Torsionsfeder um eine Drehstabfeder beziehungsweise einen Torsionsstab. Ferner bevorzugt ist eine solche Drehstabfeder integral mit der Montagewelle ausgebildet, beispielsweise als ein mit dem Brennstoffzellenstapel, bevorzugt einer Endplatte, verbundener Abschnitt der Drehstabfeder. Ebenfalls bevorzugt ist die Torsionsfeder als gefräste Hohlfeder (*machined spring*) ausgebildet. Dabei ist die Torsionsfeder besonders bevorzugt aus einem Hohlzylinder aus Federstahl gefräst worden.

Derartige gefräste Hohlfedern ermöglichen vorteilhaft eine besonders exakte Einstellung der Federkraft, insbesondere auch über ausgedehnte Zeiträume.

Die Verbindung zwischen Torsionsfeder und Montagewelle beziehungsweise Torsionsfeder und Brennstoffzellenstapel ist auf vielfältige Art realisierbar. Beispielsweise ist die Torsionsfeder an den Brennstoffzellenstapel, bevorzugt eine Endplatte, angeflanscht. Auch die Montagewelle kann einen auskragenden Flanschbereich zur Befestigung der Torsionsfeder aufweisen. Alternativ ist die Torsionsfeder unlösbar mit der Montagewelle verbunden, beispielsweise verschweißt. Ferner bevorzugt ist die Torsionsfeder mittels Formschluss, beispielsweise über Bajonett-Anschlusselemente mit dem Brennstoffzellenstapel und/oder der Montagewelle verbunden. Derartige Anschlusselemente sind bevorzugt selbstsichernd ausgebildet, insbesondere unter Berücksichtigung der Wirkrichtung der Federkraft der Torsionsfeder.

In einer ebenfalls bevorzugten Ausführungsform des erfindungsgemäßen Brennstoffzellenstapels weist die zumindest eine Montagewelle eine längserstreckte Radialnut auf. Diese erstreckt sich bevorzugt parallel zu einer Rotationsachse der Montagewelle. Die Radialnut ist bevorzugt zur Aufnahme des Endabschnitts des zumindest einen Spannelements ausgebildet. Mit anderen Worten wird der Endabschnitt des Spannelements in die Radialnut eingeführt. Ferner bevorzugt wird der Endabschnitt in der Radialnut fixiert, beispielsweise stoffschlüssig, formschlüssig und/oder kraftschlüssig.

In einer ebenfalls besonders bevorzugten Ausführungsform weist der erfindungsgemäße Brennstoffzellenstapel ferner zumindest einen Elektromotor auf, der zum elektromotorischen Antrieb der zumindest einen Montagewelle ausgebildet ist. Mit anderen Worten ist die zumindest eine Montagewelle mittels eines Elektromotors drehbar. Bevorzugt erlaubt der Motor das Drehen der Montagewelle in einer ersten Drehrichtung und besonders bevorzugt in einer ersten und einer entgegengesetzten zweiten Drehrichtung. Diese Ausführungsform erlaubt vorteilhaft ein automatisiertes Nachspannen der zumindest einen mit der Montagewelle fest verbundenen Torsionsfeder. Somit kann einem altersbedingten Spannungsverlust von den Torsionsfedern selbst entgegen gewirkt werden.

Besonders bevorzugt weist der Brennstoffzellenstapel zumindest einen Sensor auf, der zum Erfassen einer von zumindest einem Spannelement ausgeübten Zugkraft und/oder der von zumindest einer Torsionsfeder ausgeübten Federkraft ausgebildet ist. Bevorzugt erfasst der Sensor eine auf den gesamten Stapel ausgeübte Kompressionszugkraft und ist hierfür beispielsweise als Sensorzelle zwischen den gestapelten Brennstoffzellen angeordnet. Alternativ bevorzugt erfasst der Sensor die von einem bestimmten Spannelement ausgeübte Zugkraft und/oder die von einer bestimmten Torsionsfeder ausgeübten Federkraft. Beispielsweise ist ein solcher Sensor als Dehnungsmessstreifen ausgebildet. Besonders bevorzugt ist ein Sensor, insbesondere ein Dehnungsmessstreifen, an jedem Spannelement angeordnet.

Die Verwendung solcher Sensoren im erfindungsgemäßen Brennstoffzellenstapel ermöglicht vorteilhaft das Messen von kollektiven oder individuellen Längenänderungen der Spannelemente. Anhand der Längenänderung des Spannelements wird bevorzugt eine Zugkraft beziehungsweise Zugkraftänderung des jeweiligen Spannelements ermittelt. Daraus lassen sich Rückschlüsse ziehen, dass eine oder mehrere Torsionsfedern zum Ausgleich des Zugspannungsverlusts nicht mehr ausreichend gespannt sind. Durch Nachspannen der Federn können diese erneut einer Zugkraftänderung des zumindest einen Spannelementes entgegen wirken. Auch anhand von Messwerten von Sensoren zum Erfassen der von einer Torsionsfeder ausgeübten Federkraft kann ermittelt werden, ob diese Feder nachspannt werden muss.

Ferner bevorzugt weist der erfindungsgemäße Brennstoffzellenstapel zumindest eine Steuereinheit auf, die mit dem zumindest einen Sensor verbunden und zum Betrieb des zumindest einen Elektromotors ausgebildet ist. Die Steuereinheit ist bevorzugt zum Empfang eines Sensorsignals von dem zumindest einem Sensor ausgebildet. Ferner ist die Steuereinheit zur Ausgabe eines Steuersignals an den zumindest einen Elektromotor ausgebildet. Die Ausführungsform ermöglicht vorteilhaft ein automatisiertes Nachspannen der Torsionsfedern anhand von Sensorwerten zur Zugkraft der Spannelemente und/oder anhand von Sensorwerten zur Zugkraft der Torsionsfedern.

In einer besonders bevorzugten Ausführungsform weist der Brennstoffzellenstapel eine Mehrzahl von Spannelementen und eine Mehrzahl von Montagewellen auf. Jede Montagewelle ist dabei mit ein oder mehreren gespannten Torsionsfedern mit dem Brennstoffzellenstapel verbunden und an jeder Montagewelle sind ein oder mehrere Spannelemente fixiert. Ferner bevorzugt weist der Brennstoffzellenstapel eine Mehrzahl von zum Antrieb zumindest einer der Montagewellen ausgebildeten Elektromotoren auf.

Diese Ausführungsform ermöglicht eine Zugspannungskontrolle von individuellen Gruppen von Spannelementen oder sogar von einzelnen Spannelementen. Wesentlich dafür ist, dass verschiedene Spannelemente an verschiedenen Montagewellen fixiert sind. Das Drehen der Montagewellen erfolgt bevorzugt durch einen gemeinsamen Elektromotor. Beispielsweise können zwei Montagewellen von einem mittig zwischen diesen Wellen angeordneten Motor betrieben werden. Ebenfalls bevorzugt sind mehrere Spannelemente über jeweilige Kupplungen steuerbar kraftschlüssig mit einem gemeinsamen Motor verbunden. Der Brennstoffzellenstapel dieser Ausführungsform weist ferner bevorzugt eine Mehrzahl von zum Messen der Zugspannung der Spannelemente eingerichtete Sensoren auf.

Ferner bevorzugt weist die zumindest eine Montagewelle zumindest ein Sperrrad und zumindest eine mit dem Sperrrad in Eingriff stehende Sperrklinke auf. Bevorzugt wird somit das Prinzip einer Ratsche genutzt, um eine Drehung der Montagewelle nur in eine Richtung zu gestatten. Somit können die Torsionsfedern entlastet und die Lager der Elektromotoren geschont werden. Diese Ausführungsform ist vorteilhaft mit dem Einsatz eines einzelnen Motors für eine Mehrzahl von Montagewellen kombinierbar.

In einer ebenfalls bevorzugten Ausführungsform des erfindungsgemäßen Brennstoffzellenstapels ist zumindest eine von der ersten Endplatte und der zweiten Endplatte segmentiert ausgebildet. Bevorzugt verläuft über jedes dieser Segmente zumindest ein Spannelement. Besonders bevorzugt weist jedes Endplattensegment eine individuelle Montagewelle auf, die unabhängig von den anderen Montagewellen über zumindest eine Torsionsfeder mit dem Brennstoffzellenstapel, bevorzugt dem jeweiligen Endplattensegment, verbunden ist. Die dadurch bewirkte Entkopplung der einzelnen Spannelemente ermöglicht vorteilhaft eine lokale Variation der Stapelkompression.

Bei dem Spannelement handelt es sich bevorzugt um ein aus dem Stand der Technik bekanntes elastisches Spannelement, welches jeweils an den Endplatten des Brennstoffzellenstapels befestigt ist oder den Brennstoffzellenstapel in zumindest einem Querschnitt entlang der Stapelrichtung im Wesentlichen vollständig (mit anderen Worten ringförmig) umläuft.

Das Spannelement liegt vorzugsweise zumindest abschnittsweise flächig an einer Oberfläche des Brennstoffzellenstapels an. Alternativ ist das Spannelement zumindest abschnittsweise vom Brennstoffzellenstapel beabstandet. Beispielsweise stehen die Endplatten in lateraler Richtung über die Brennstoffzellen über, so dass das Spannelement einen Abstand zu den Seitenwänden der Brennstoffzellen aufweist. Alternativ werden auf den Endplatten montierte Abstandshalter genutzt, um einen Abstand zwischen einem oder mehreren Spannelementen und einer oder beiden Endplatten zu realisieren.

Das Spannelement ist bevorzugt als band- oder streifenförmiges flexibles und/oder elastisches Spannelement ausgebildet, wie beispielsweise aus der EP 1 870 952 A2 bekannt. Das Spannelement besteht bevorzugt aus einem elastischen Kunststoff, einem elastischen Polymer (z.B. Nylon) oder einem elastischen Metall, und weist bei Standardbedingungen ein Elastizitätsmodul > 1 GPa und besonders bevorzugt > 5 GPa entlang der Spannrichtung auf.

Ein Endabschnitt des Spannelements ist ferner bevorzugt stoffschlüssig und/oder mittels mindestens eines Spannmittels an einer Stapelendplatte fixiert. Um eine einfache Demontage des Brennstoffzellenstapels zu gewährleisten, ist das Spannelement bevorzugt an mindestens einer Endplatte des Stapels lösbar fixiert. Besonders bevorzugt ist das Spannelement an der Endplatte eingehängt. Hierfür weist die Endplatte bevorzugt zumindest einen Einhängehaken zum Einhängen des Spannelements an einer seiner Seitenflächen oder auf seiner in Stapelrichtung nach außen weisenden Oberfläche auf. Ebenfalls bevorzugt weist das Spannelement mindestens eine Einhängeöffnung zum Einhängen an einem Einhängehaken auf. Der andere Endabschnitt des Spannelements ist dann an der Montagewelle fixiert.

Alternativ erstreckt sich das zumindest eine Spannelement in einem Querschnitt in Stapelrichtung zumindest im Wesentlichen um einen Umfang des Brennstoffzellenstapels. Dabei ist ein Spannelement an mindestens einem seiner Endbereiche an einem anderen Endbereich desselben Spannelements oder an einem anderen Spannelement fixiert. Das Spannelement kann also ringförmig geschlossen ausgebildet sein. Dabei stoßen die Endabschnitte nicht stumpf aufeinander, sondern verlaufen abschnittsweise parallel entlang einander, so dass beide Endabschnitte in dieselbe Richtung weisen. Die so verbundenen Endabschnitte sind dann gemeinsam an einer Montagewelle fixiert und ermöglichen ein besonders effizientes Auf- und Abwickeln.

In einer ebenfalls bevorzugten Ausführungsform ist ein Umlenkmittel in zumindest einem von dem zumindest einen Spannelement überspannten Kantenbereich des Brennstoffzellenstapels angeordnet. Besonders bevorzugt ist ein Umlenkmittel in zumindest einem von dem zumindest einen Spannelement überspannten Kantenbereich der ersten Endplatte und/oder der zweiten Endplatte angeordnet. Das Umlenkmittel ist insbesondere dazu ausgebildet, eine Reibung zwischen dem Spannelement und dem Kantenbereich zu verringern. Diese Reibungsverminderung ermöglicht vorteilhaft eine wiederholte und fein justierbare Einstellbarkeit der Stapelspannung über den veränderbar fixierbaren Abstand zwischen Nachspannelement und Stapel.

Bei dem Umlenkmittel handelt es sich bevorzugt um eine gleitreibungsarme Oberfläche, beispielsweise durch eine entsprechende Beschichtung. Ebenfalls bevorzugt handelt es sich bei dem Umlenkmittel um eine Umlenkrolle. Ebenfalls bevorzugt ist das Umlenkmittel in zumindest einer der Endplatten angeordnet. Für weitere Details zur Ausgestaltung der Umlenkmittel wird hiermit vollumfänglich auf die DE 10 2010 007 979 A1 Bezug genommen.

Besonders bevorzugt sind alle Kantenbereiche der Endplatten mit Umlenkrollen versehen, wobei zumindest einige davon als Montagewelle mit Mitteln zum Fixieren eines Endabschnitts eines Spannelements ausgestattet sind. Bevorzugt sind zumindest diese Umlenkrollen (Montagewellen) über gespannte Torsionsfedern mit dem Brennstoffzellenstapel verbunden.

Ebenfalls Gegenstand der Erfindung ist ein Fahrzeug, insbesondere ein elektromotorisch betriebenes Fahrzeug mit einem erfindungsgemäßen Brennstoffzellenstapel, wie vorstehend beschrieben. Der Brennstoffzellenstapel dient dabei insbesondere dem Speisen eines Elektromotors des Fahrzeugs.

Weitere bevorzugte Ausgestaltungen der Erfindung ergeben sich aus den übrigen, in den Unteransprüchen genannten Merkmalen. Die verschiedenen in dieser Anmeldung genannten Ausführungsformen der Erfindung sind, sofern im Einzelfall nicht anders erläutert, mit Vorteil miteinander kombinierbar.

Die Erfindung wird nachfolgend in Ausführungsbeispielen anhand der zugehörigen Zeichnungen erläutert. Es zeigen:

Figur 1     eine schematische Darstellung eines Brennstoffzellensystems gemäß dem Stand der Technik;

Figur 2     einen Brennstoffzellenstapel mit einer Mehrzahl den Stapel komprimierender Spannelemente gemäß dem Stand der Technik;

Figur 3     eine Detaildarstellung des Brennstoffzellenstapels gemäß Fig.2;

Figur 4      eine Detaildarstellung des Brennstoffzellenstapels gemäß Fig.2;

Figur 5      einen Brennstoffzellenstapel gemäß einer Ausführungsform;

Figur 6      eine Schnittdarstellung des Brennstoffzellenstapels der Fig. 5;

Figur 7      eine Detaildarstellung des Brennstoffzellenstapels der Fig. 5;

Figur 8      zwei Varianten gefräster Hohlfedern;

Figur 9      eine schematische Darstellung relevanter Größen einer Torsionsfeder; und

Figur 10     einen Brennstoffzellenstapel gemäß einer alternativen Ausführungsform.

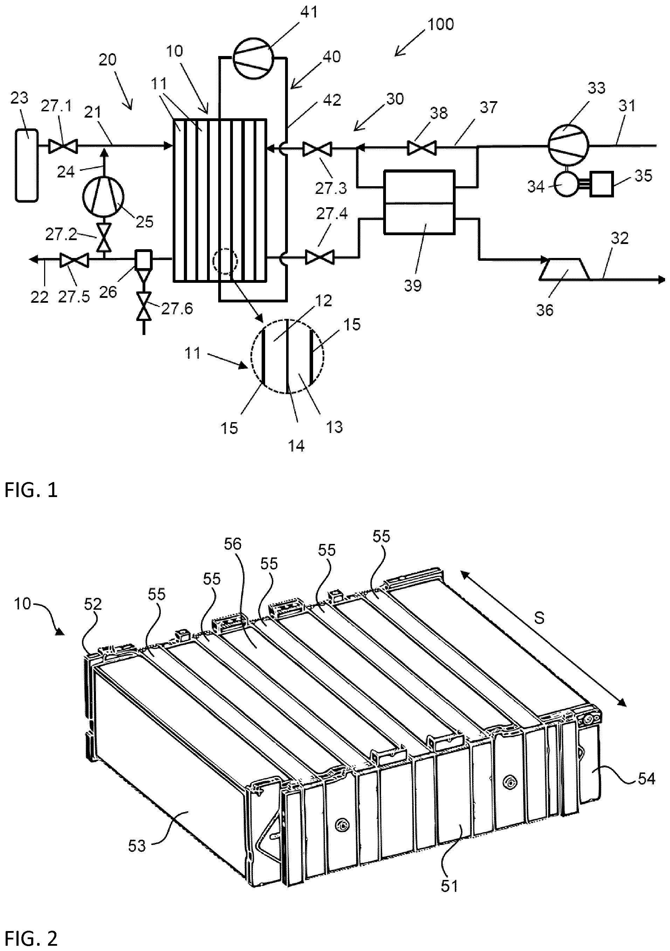

Figur 1 zeigt ein insgesamt mit 100 bezeichnetes Brennstoffzellensystem gemäß dem Stand der Technik. Das Brennstoffzellensystem 100 ist Teil eines nicht weiter dargestellten Fahrzeugs, insbesondere eines Elektrofahrzeugs, das einen Elektrotraktionsmotor aufweist, der durch das Brennstoffzellensystem 100 mit elektrischer Energie versorgt wird.

Das Brennstoffzellensystem 100 umfasst als Kernkomponente einen Brennstoffzellenstapel 10, der eine Vielzahl von in Stapelform angeordneten Einzelzellen 11 aufweist, die durch abwechselnd gestapelte Membran-Elektroden-Anordnungen (MEA) 14 und Bipolarplatten 15 ausgebildet werden (siehe Detailausschnitt). Jede Einzelzelle 11 umfasst somit jeweils eine MEA 14 mit einer hier nicht näher dargestellten ionenleitfähigen Polymerelektrolytmembran sowie beidseits daran angeordneten katalytischen Elektroden. Diese Elektroden katalysieren die jeweilige Teilreaktion der Brennstoffumsetzung. Die Anoden- und Kathodenelektrode sind als Beschichtung auf der Membran ausgebildet und weisen ein katalytisches Material auf, beispielsweise Platin, das auf einem elektrisch leitfähigen Trägermaterial großer spezifischer Oberfläche, beispielsweise einem kohlenstoffbasierten Material, geträgert vorliegt.

Wie in der Detaildarstellung der Figur 1 gezeigt, ist zwischen einer Bipolarplatte 15 und der Anode ein Anodenraum 12 ausgebildet und zwischen der Kathode und der nächsten Bipolarplatte 15 der Kathodenraum 13 ausgebildet. Die Bipolarplatten 15 dienen der Zuführung der Betriebsmittel in die Anoden- und Kathodenräume 12, 13 und stellen ferner die elektrische Verbindung zwischen den einzelnen Brennstoffzellen 11 her. Optional können Gasdiffusionslagen zwischen den Membran-Elektroden-Anordnungen 14 und den Bipolarplatten 15 angeordnet sein.

Um den Brennstoffzellenstapel 10 mit den Betriebsmitteln zu versorgen, weist das Brennstoffzellensystem 100 einerseits eine Anodenversorgung 20 und andererseits eine Kathodenversorgung 30 auf.

Die Anodenversorgung 20 des in Figur 1 gezeigten Brennstoffzellensystems 100 umfasst einen Anodenversorgungspfad 21, welcher der Zuführung eines Anodenbetriebsmittels (dem Brennstoff), beispielsweise Wasserstoff, in die Anodenräume 12 des Brennstoffzellenstapels 10 dient. Zu diesem Zweck verbindet der Anodenversorgungspfad 21 einen Brennstoffspeicher 23 mit einem Anodeneinlass des Brennstoffzellenstapels 10. Das Einstellen des Einspeisedrucks des Anodenbetriebsmediums in die Anodenräume 12 des Brennstoffzellenstapels 10 erfolgt über ein Dosierventil 27.1. Die Anodenversorgung 20 umfasst ferner einen Anodenabgaspfad 22, der das Anodenabgas aus den Anodenräumen 12 über einen Anodenauslass des Brennstoffzellenstapels 10 abführt.

Darüber hinaus weist die Anodenversorgung 20 des in Figur 1 gezeigten Brennstoffzellensystems 100 eine Rezirkulationsleitung 24 auf, welche den Anodenabgaspfad 22 mit dem Anodenversorgungspfad 21 verbindet. Die Rezirkulation von Brennstoff ist üblich, um den überstöchiometrisch eingesetzten Brennstoff dem Brennstoffzellenstapel 10 zurückzuführen. In der Rezirkulationsleitung 24 sind eine Rezirkulationsfördereinrichtung 25, vorzugsweise ein Rezirkulationsgebläse, sowie ein Klappenventil 27.2 angeordnet.

In der Anodenversorgung 22 des Brennstoffzellensystems ist ferner ein Wasserabscheider 26 verbaut, um das aus der Brennstoffzellenreaktion entstehende Produktwasser abzuleiten. Ein Ablass des Wasserabscheiders kann mit der Kathodenabgasleitung 32, einem Wassertank oder einer Abgasanlage verbunden sein.

Die Kathodenversorgung 30 des in Figur 1 gezeigten Brennstoffzellensystems 100 umfasst einen Kathodenversorgungspfad 31, welcher den Kathodenräumen 13 des Brennstoffzellenstapels 10 ein sauerstoffhaltiges Kathodenbetriebsmittel zuführt, insbesondere Luft, die aus der Umgebung angesaugt wird. Die Kathodenversorgung 30 umfasst ferner einen Kathodenabgaspfad 32, welcher das Kathodenabgas (insbesondere die Abluft) aus den Kathodenräumen 13 des Brennstoffzellenstapels 10 abführt und dieses gegebenenfalls einer nicht dargestellten Abgasanlage zuführt.

Zur Förderung und Verdichtung des Kathodenbetriebsmittels ist in dem Kathodenversorgungspfad 31 ein Verdichter 33 angeordnet. In dem dargestellten Ausführungsbeispiel ist der Verdichter 33 als ein hauptsächlich elektromotorisch angetriebener Verdichter 33 ausgestaltet, dessen Antrieb über einen mit einer entsprechenden Leistungselektronik 35 ausgestatteten Elektromotor 34 erfolgt.

Das in Figur 1 gezeigte Brennstoffzellensystem 100 weist ferner ein stromaufwärts des Verdichters 33 in der Kathodenversorgungsleitung 31 angeordnetes Befeuchtermodul 39 auf. Das Befeuchtermodul 39 ist einerseits so in dem Kathodenversorgungspfad 31 angeordnet, dass es von dem Kathodenbetriebsgas durchströmbar ist. Andererseits ist es so in dem Kathodenabgaspfad 32 angeordnet, dass es von dem Kathodenabgas durchströmbar ist. Ein Befeuchter 39 weist typischerweise eine Mehrzahl von wasserdampfpermeablen Membranen auf, die entweder flächig oder in Form von Hohlfasern ausgebildet sind. Dabei wird eine Seite der Membranen von dem vergleichsweise trockenen Kathodenbetriebsgas (Luft) überströmt und die andere Seite von dem vergleichsweise feuchten Kathodenabgas (Abgas). Getrieben durch den höheren Partialdruck an Wasserdampf in dem Kathodenabgas kommt es zu einem Übertritt von Wasserdampf über die Membran in das Kathodenbetriebsgas, das auf diese Weise befeuchtet wird.

Das Brennstoffzellensystem 100 weist ferner einen die Kathodenversorgungsleitung stromaufwärts und stromabwärts des Befeuchters 39 miteinander verbindenden Befeuchterbypass 37 mit einem darin angeordneten Klappenventil als Bypassstellmittel 38 auf. Ferner sind Klappenventile 27.3 und 27.4 stromaufwärts des Brennstoffzellenstapels 10 in der Anodenversorgungsleitung 31 beziehungsweise stromabwärts des Brennstoffzellenstapels 10 in der Anodenabgasleitung 32 angeordnet.

Verschiedene weitere Einzelheiten der Anoden- und Kathodenversorgung 20, 30 sind in Figur 1 aus Gründen der Übersichtlichkeit nicht gezeigt. Beispielsweise kann die Anodenabgasleitung 22 in die Kathodenabgasleitung 32 münden, sodass das Anodenabgas und das Kathodenabgas über eine gemeinsame Abgasanlage abgeführt werden.

Die Figur 2 zeigt eine Darstellung eines Brennstoffzellenstapels gemäß dem Stand der Technik, der im Brennstoffzellensystem 100 der Figur 1 angeordnet sein kann. Der Brennstoffzellenstapel 10 weist eine Mehrzahl von in Stapelrichtung S flächig aufeinander gestapelten Brennstoffzellen auf.

In Stapelrichtung S ist der Brennstoffzellenstapel 10 von einer ersten Endplatte 51 und einer gegenüberliegenden zweiten Endplatte 52 begrenzt. In einer ersten Richtung quer zur Stapelrichtung S ist der Brennstoffzellenstapel 10 durch Seitenverkleidungen 53, 54 begrenzt. In einer zweiten Richtung quer zur ersten Richtung und quer zur Stapelrichtung S ist der Brennstoffzellenstapel 10 durch Seitenverkleidung 56 begrenzt.

Der in Figur 2 gezeigte Brennstoffzellenstapel 10 ist über eine Mehrzahl von insgesamt fünf Spannelementen 55 komprimiert. Jedes Spannelement 55 umläuft dabei einen Querschnitt des Brennstoffzellenstapels 10 vollständig, wobei es die Endplatten 51, 52 sowie die Seitenverkleidung 56 überstreicht. Die Spannelemente 55 liegen dabei an den Endplatten 51, 52 und der Seitenverkleidung 56 an. Jedes Spannelement 55 ist in einem Bereich der ersten Endplatte 51 mit sich selbst verschweißt. Zum Komprimieren des Brennstoffzellenstapels 10 erfolgt das Verschweißen der Spannelemente 55 mit sich selbst, während die Spannelemente 55 unter Zugspannung stehen.

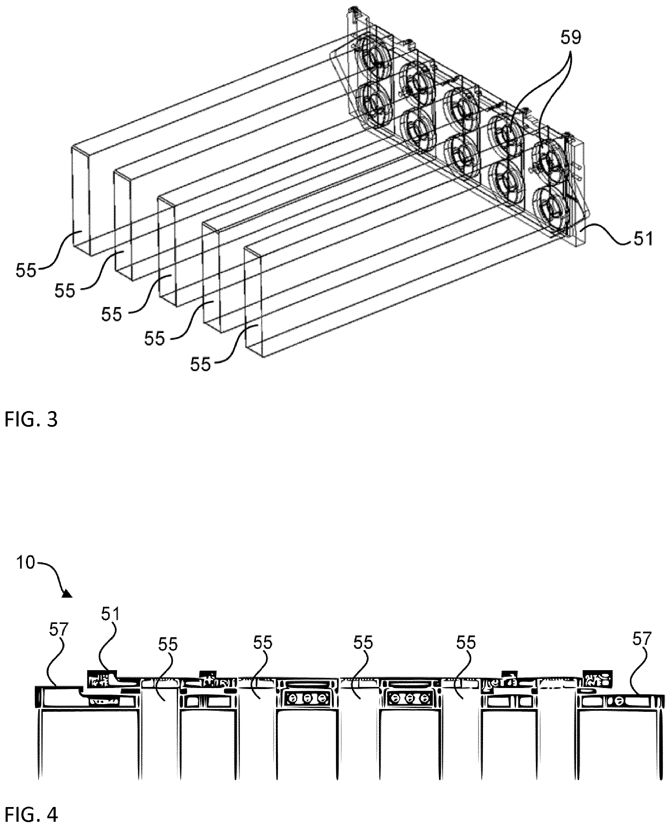

Ein Nachspannen der Spannelemente 55 ist bei dem Brennstoffzellenstapel 10 gemäß der Figur 2 nicht möglich. Stattdessen sind, wie in der Figur 3 dargestellt, zwischen der Endplatte 51 und einer Kompressionsplatte (nicht dargestellt) des Brennstoffzellenstapels 10 der Figur 2 eine Mehrzahl von Kompressionsfedern 59 angeordnet. Kommt es zu einem alterungsbedingten Längen der Spannelemente 55, soll dies durch die Kompressionsfedern 59 ausgeglichen werden. Die Federn 59 sind in nach innen weisenden Vertiefungen der Endplatte 51 angeordnet. Somit ist entweder zusätzlicher Bauraum für die Federn 59 notwendig, beispielsweise durch eine dickere Ausführung der Endplatte 51, oder die Endplatte 51 muss im Bereich der Vertiefungen dünner ausgebildet werden und ist somit instabiler. Beide Varianten führen zu spezifischen Nachteilen des jeweiligen Designs. Wie in Figur 4 dargestellt, ist aufgrund der Verwendung umlaufender Spannelemente 55 ein Spannen der Endplatte 51 in den Einlass-/Auslassebereichen 57 des Brennstoffzellenstapels 10, in denen die Betriebsmedien zu- beziehungsweise abgeführt werden, nicht möglich. Somit kommt es im Stand der Technik nachteilig zu einem Aufbiegen der Endplatten 51 und zu ungleicher Kompression.

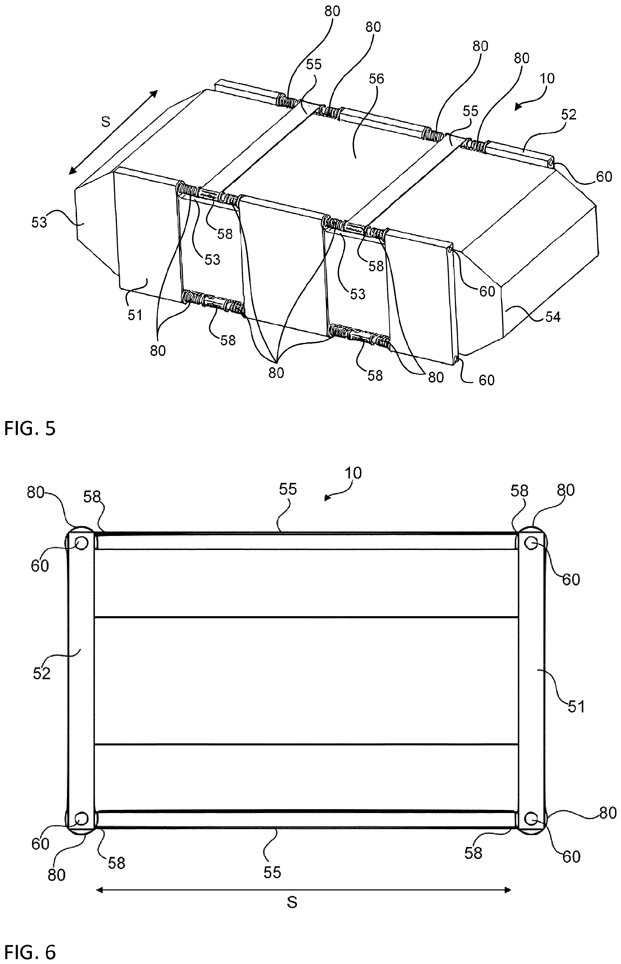

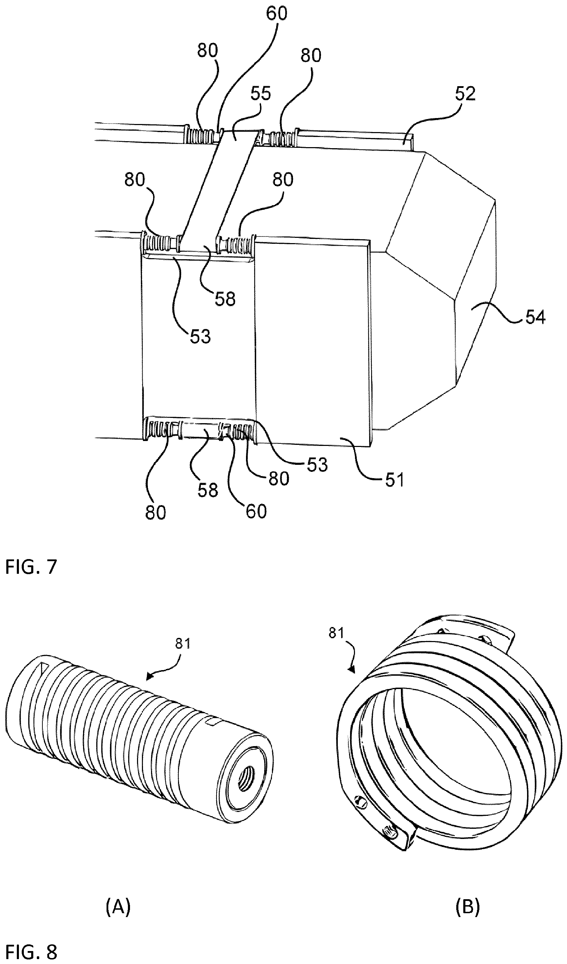

Figur 5 zeigt eine schematische Darstellung eines Brennstoffzellenstapels 10 gemäß einer ersten Ausführungsform der vorliegenden Erfindung. Figur 6 zeigt eine Schnittdarstellung dieses Brennstoffzellenstapels 10 entlang der Stapelrichtung S. Figur 7 zeigt eine Detaildarstellung des in Figur 5 gezeigten Brennstoffzellenstapels 10, der im Folgenden beschrieben wird, sofern er sich von dem Brennstoffzellenstapel gemäß den Fig. 2 und 3 unterscheidet.

Der Brennstoffzellenstapel 10 weist eine erste Endplatte 51 sowie eine gegenüberliegende zweite Endplatte 52 auf. Jede Endplatte 51, 52 weist jeweils in einem oberen und in einem unteren Kantenbereich, das heißt jeweils im Bereich des Übergangs zwischen der nach außen weisenden Oberfläche der Endplatten 51, 52 und einer oberen beziehungsweise unteren senkrecht dazu stehenden Oberfläche, einen durchgehenden zylindrischen Hohlraum auf. In diesen Hohlräumen sind Montagewellen 60 drehbar gelagert, beispielsweise durch in den Hohlräumen angeordnete, geeignete Lagerschalen.

Ferner weist die erste und zweite Endplatte 51, 52 jeweils zwei Aussparungen 53 in dem oberen und dem unteren Kantenbereich auf. In der Aussparung liegt die jeweilige Montagewelle 60 frei. Mit anderen Worten weisen die Endplatten 51, 52 im Bereich der Aussparungen 53 eine geringere vertikale Ausdehnung (bezogen auf die Ausrichtung der Figur 4) auf.

Der Brennstoffzellenstapel 10 weist zwei Spannelemente 55 auf, die zwischen der ersten Endplatte 51 und der zweiten Endplatte 52 gespannt sind, insbesondere zwischen einem oberen Kantenbereich der ersten Endplatte 51 und einem oberen Kantenbereich der zweiten Endplatte 52. Dabei sind die Endabschnitte 58 dieser Spannelemente 55 jeweils an einer der Montagewellen 60 fixiert. In Figur 4 sind nur die an den Montagewellen 60 der ersten Endplatte 51 fixierten ersten Endabschnitte 58 explizit bezeichnet. Nichtsdestotrotz weisen die Spannelemente 55 zweite, an den Montagewellen 60 in den Kantenbereichen der zweiten Endplatte 52 fixierte Endabschnitte auf.

Die ersten Endabschnitte 58 sind dabei im Bereich der Aussparungen 53 der Endplatte 51 an der Montagewelle 60 im oberen Kantenbereich der ersten Endplatte 51 fixiert. Die zweiten Endabschnitte sind in analoger Weise im Bereich von Aussparungen der zweiten Endplatte 52 an der dortigen Montagewelle 60 fixiert. Der Brennstoffzellenstapel 10 weist zwei weitere, zwischen dem unteren Kantenbereich der ersten Endplatte 51 und dem unteren Kantenbereich der zweiten Endplatte 52 gespannte Spannelemente auf. Von diesen sind in Figur 4 lediglich die ersten Endabschnitte 58 dargestellt, die im Bereich von Aussparungen 53 des unteren Kantenbereichs der ersten Endplatte 51 an der dort befindlichen Montagewelle 60 fixiert sind.

Durch das Fixieren, das heißt stoff-, kraft-, und/oder formschlüssiges Befestigen der ersten Endabschnitte 58 und der zweiten Endabschnitte der Spannelemente 55 an den Montagewellen 60 im Bereich von Aussparungen 53 der Endplatten 51, 52 können die Spannelemente 55 durch Drehen der Montagewellen 60 vorteilhaft auf diese aufgewickelt werden, ohne dass die Endplatten 51 ,52 dieses Aufwickeln behindern würden.

Innerhalb der Aussparungen 53 sind ferner Torsionsfedern 80 sowohl an der Montagewelle 60 als auch an der jeweiligen Endplatte 51, 52 fixiert. Insbesondere sind die Torsionsfedern 80 mit der jeweiligen Montagewelle 60 verschweißt und mittels eines Flanschs (nicht dargestellt) an einer nach innen weisenden Wandung der jeweiligen Aussparung 53 befestigt. Dabei ist jeder Endabschnitt 58 jedes Spannelements 55 in jeder Aussparung 53 von jeweils zwei Torsionsfedern 80 umgeben. Auf jedem innerhalb einer Aussparung 53 freiliegenden Abschnitt einer Montagewelle 60 sind somit ein Endabschnitt 58 eines Spannelements 55 und zwei Torsionsfedern 80 angeordnet.

Die Torsionsfedern 80 sind so gespannt, dass eine von den Torsionsfedern 80 auf die Montagewelle 60 ausgeübte Kraft beziehungsweise ein auf die Montagewelle 60 ausgeübtes Drehmoment einer von den Spannelementen auf die Montagewelle 60 ausgeübten Kraft beziehungsweise einem auf die Montagewelle 60 ausgeübtes Drehmoment entgegengesetzt sind. Dabei überträgt insbesondere ein zumindest einfach um die Montagewelle gewickeltes Spannelement 55 ein Drehmoment darauf. Aufgrund der drehbaren Lagerung der Montagewellen 60 besteht stets ein kinematisches Gleichgewicht zwischen den Torsionsfedern 80 und den Spannelementen 55. Somit wird ein Nachlassen der Zugspannung der Spannelemente 55, beispielsweise durch ein alterungsbedingtes Längen, durch ein Aufwickeln der Spannelemente 55 auf die Montagewellen 60, welches durch das Drehmoment der Torsionsfedern 80 bewirkt wird, ausgeglichen. Somit ist ein Erhalt der Zugspannung der Spannelemente 55 und somit der auf den Stapel 10 wirkenden Kompressionszugkraft auch über ausgedehnte Zeiträume sichergestellt.

Bevorzugt weisen die Montagewellen 60 jeweils eine längserstreckte Radialnut (nicht dargestellt) auf. Mit anderen Worten ist entlang einer Längsausdehnung der Montagewelle 60 eine Nut in radialer Richtung in die Montagewelle 60 eingebracht. Die Radialnut ist dabei dafür ausgebildet, einen Endabschnitt 58 eines oder mehrerer Spannelemente 55 aufzunehmen. Der Endabschnitt 58 wird daraufhin in der Radialnut fixiert, beispielsweise stoffschlüssig mittels eines Klebstoffs. Ebenso denkbar ist, dass der Endabschnitt 58 eine endständige Verdickung aufweist, die mit einer innenliegenden Aufweitung der Radialnut korrespondiert. Der Endabschnitt 58 des Spannelements 55 kann dann seitlich in die Montagewelle 60 eingeführt werden, das heißt in Richtung der Längsausdehnung der Welle 60, und wäre somit formschlüssig in der Radialnut fixiert. Ebenso denkbar wäre, dass die Radialnut nach Einführen des Endabschnitts 58 verengt wird, beispielsweise durch Aufsetzen eines Sprengrings auf die Welle 60. Dies hätte eine kraftschlüssige Fixierung des Endabschnitts 58 in der Welle 60 zur Folge.

In Figur 8 sind zwei bevorzugte Ausführungsformen einer Torsionsfeder 80 als gefräste Hohlfedern 81 dargestellt. Dabei zeigt Figur 8 (A) eine erste aus einem Hohlzylinder Federstahl gefrästen Torsionsfeder 80. Diese weist ein Innengewinde auf, mit dem die Torsionsfeder 80 auf eine Montagewelle 60 aufgeschraubt werden kann, wobei die Gewinderichtung eine Selbstsicherung der Feder 80 auf der Montagewelle 60 bewirkt. Eine Fixierung der Torsionsfeder 80 am Brennstoffzellenstapel 10, insbesondere einer Innenwandung der Aussparung 53 einer Endplatte 51, 52 erfolgt im einfachsten Fall durch einen Kraftschluss der komprimierten Torsionsfeder 80 mit einer Endplatte 51, 52 und einem Formschluss einer in die Ausfräsung der Feder 80 eingreifenden Anschlagsnase der Endplatte 51 ,52. Figur 8 (B) zeigt eine zweite aus einem Hohlzylinder Federstahl gefrästen Torsionsfeder 80. Diese weist beidseitig an ihren Enden Durchgangsbohrungen als Anschlusselemente für eine Befestigung an der Montagewelle 60 beziehungsweise dem Brennstoffzellenstapel 10, insbesondere einer Endplatte 51, 52, auf. Die Anschlusselemente sind als Führung für einen Sicherungssplint ausgebildet.

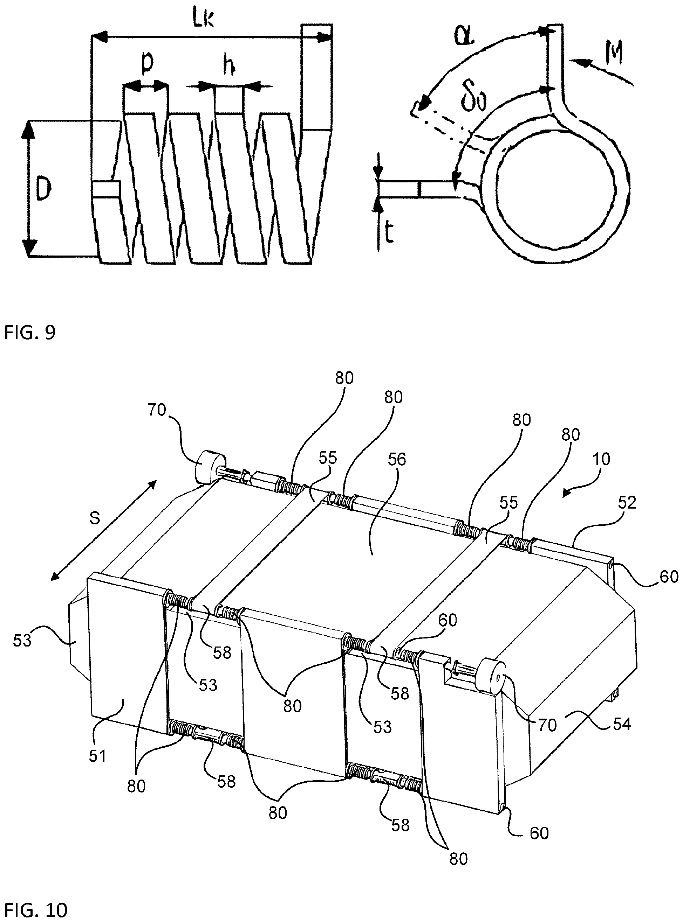

Figur 9 zeigt eine schematische Darstellung einer Torsionsfeder 80 sowie mit der Torsionsfeder zusammenhängender relevanter Größen.

Dabei bezeichnet c das Wicklungsverhältnis das dimensionslose Verhältnis aus mittlerem Durchmesser der Feder D [mm] und der Drahtstärke t [mm]. Ferner bezeichnet b die Breite des Drahtes [mm], M das von der Feder ausgeübte Drehmoment [Nmm], E das Elastizitätsmodul der Feder [MPa], k die Torsionsfederkonstante der Feder [Nmm/°], $K_B$ einen dimensionslosen Krümmungskorrekturfaktor, $L_K$ die aktive Länge der Feder [mm], n die Nummer der aktiven Wicklungen, p den Abstand zwischen den Wicklungen [mm], $\alpha$ die Winkelauslenkung eines Endes der Feder [°], $\delta_o$ einen Ruhewinkel zwischen den Enden der Feder [°], und s eine Biegebeanspruchung des Federmaterials [MPa].

Mit den in Tabelle 1 angegebenen Formeln für aus Draht mit rechteckigem Querschnitt gewickelte Schraubenfedern ergibt sich, dass mit 8 Federn, wobei jede Feder jeweils einen mittleren Durchmesser D = 30 mm, zehn Wicklungen (n = 10), ein Elastizitätsmodul E = 200 Gpa, eine Drahtbreite b = 10 mm und eine Drahtdicke t = 6 mm aufweist, eine Winkelverdrehung von ca. 14° ausreichend ist, um eine Kraft von 5000 N aufzubringen. Für ein diese Zugkraft aufbringendes Spannelement 55 wäre es somit ausreichend, wenn auf jeder Montagewelle 60 auf jeder Seite des Endabschnitts 58 jeweils zwei solche Federn fest mit der Montagewelle 60 und einem Fixpunkt des Brennstoffzellenstapels 10 (unbewegliches Ende) verbunden sind. Mit einer solchen Konfiguration, ließe sich die Zugkraft des Spannelements 55 von 5000 N für einen ausgedehnten Zeitraum gewährleisten.

Tabelle 1

$$\alpha = \frac{12 \cdot 180 \cdot M \cdot n \cdot D}{E \cdot b \cdot t^3}$$

$$\sigma = K_b \cdot \frac{6 \cdot M}{b \cdot t^2}$$

$$k = \frac{E \cdot b \cdot t^3}{12 \cdot 180 \cdot n \cdot D}$$

$$K_b \approx \frac{3c - 1}{3c - 3}$$

Ein Brennstoffzellenstapel 10 gemäß einer weiteren Ausführungsform ist in Figur 10 gezeigt. Diese unterscheidet sich von der ersten Ausführungsform dadurch, dass jede der Montagewellen 60 zum Nachspannen der Torsionsfedern 80 einen Elektromotor 70 aufweist, der zum elektromotorischen Antrieb, das heißt zum Drehen, der entsprechenden Montagewelle 60 ausgebildet ist. Die Elektromotoren sind in Figur 10 nur für die in den oberen Kantenbereichen befindlichen Montagewellen 60 der Endplatten 51, 52 dargestellt.

Wie anhand der Darstellung der Figuren 6 und 10 ersichtlich, führt ein Nachspannen der mit den Montagewellen 60 fest verbundenen Torsionsfedern 80 durch Drehen der Montagewellen 60 unweigerlich auch zu einem Aufwickeln des zwischen der ersten Endplatte 51 und der zweiten Endplatte 52 gespannten Spannelements 55 auf eine der Montagewellen 60, beispielsweise auf die durch Elektromotor 70 betriebene Montagewelle 60 der ersten Endplatte 51, und somit unweigerlich auch zu einer Verkürzung des Spannelements 55 im Bereich zwischen den Endabschnitten 58.

Durch das Verkürzen der Spannelemente 55 steigt die Zugspannung in dem Spannelement 55 und folglich die von diesem ausgeübte und der Federkraft der Torsionsfedern 80 entgegengesetzte Zugkraft. Gleichzeitig steigt auch die von den Torsionsfedern 80 ausgeübte Federkraft durch Nachspannen der Federn 80. Um effektiv ein Nachspannen der Torsionsfedern 80, das heißt eine stärkere Sicherung der Spannelemente zu erreichen, sollte bei einer festen Umdrehung der Montagewellen 60 die Federkraft der Federn 80 stets etwas stärker zunehmen als die Zugspannung der Spannelemente 55.

Der Brennstoffzellenstapel 10 gemäß Figur 10 erlaubt vorteilhaft das Nachspannen der Torsionsfedern 80 mittels der Elektromotoren 70. Dabei kann das Nachspannen vorteilhaft gleichmäßig durch eine Mehrzahl von Elektromotoren 70 erfolgen. Ebenso vorteilhaft sind diese Elektromotoren 70 von einer Steuereinheit (nicht dargestellt) kontrolliert, die Sensorwerte von zumindest einem Zugspannungssensor (nicht dargestellt), beispielsweise einem Dehnungsmessstreifen oder einem Federkraftsensor, empfängt. Somit erlauben die Elektromotoren 70 eine automatisierte Feedbackregelung der mittels der Spannelemente 55 auf den Stapel 10 übertragenen Zugspannung beziehungsweise der mittels der Torsionsfedern 80 auf die Montagewellen 60 und somit die darin fixierten Spannelemente 55 übertragenen Kraft.

**Patentansprüche**

1. Brennstoffzellenstapel (10), aufweisend

   eine erste Endplatte (51) und eine zweite Endplatte (52);
   eine Vielzahl von zwischen den Endplatten (51, 52) angeordneten Brennstoffzellen (11);
   zumindest ein in Stapelrichtung (S) zwischen den Endplatten (51, 52) gespanntes elastisches Spannelement (55); und
   zumindest eine drehbar gelagerte Montagewelle (60),
   **dadurch gekennzeichnet, dass**
   zumindest ein Endabschnitt (58) zumindest eines Spannelements (55) an der drehbaren Montagewelle (60) fixiert und die drehbare Montagewelle (60) über zumindest eine gespannte Torsionsfeder (80) mit dem Brennstoffzellenstapel (10) verbunden ist.

2. Brennstoffzellenstapel (10) nach Anspruch 1, wobei die zumindest eine Montagewelle (60) entlang eines Kantenbereichs der ersten und/oder zweiten Endplatte (51, 52) verläuft und über die zumindest eine gespannte Torsionsfeder (80) mit dieser Endplatte (51, 52) verbunden ist.

3. Brennstoffzellenstapel (10) nach Anspruch 1 oder 2,

   wobei die zumindest eine Montagewelle (60) abschnittsweise innerhalb eines Kantenbereichs einer Endplatte (51, 52) verläuft,
   wobei der Kantenbereich zumindest eine Aussparung (53) aufweist, in denen die Montagewelle (60) freiliegt, und
   wobei zumindest ein Spannelement (55) und zumindest eine Torsionsfeder (80) in der Aussparung (53) mit der Montagewelle (60) verbunden sind.

4. Brennstoffzellenstapel (10) nach einem der vorangehenden Ansprüche, wobei durch Drehung der Montagewelle (60) die Federkraft der zumindest einen Torsionsfeder (80) einstellbar ist.

5. Brennstoffzellenstapel (10) nach einem der vorangehenden Ansprüche, wobei die zumindest eine Torsionsfeder (80) als Schraubenfeder, Drehstabfeder oder gefräste Hohlfeder (81) ausgebildet ist.

6. Brennstoffzellenstapel (10) nach einem der vorangehenden Ansprüche, aufweisend zumindest einen zum elektromotorischen Antrieb der zumindest einen Montagewelle (60) ausgebildeten Elektromotor (70).

7. Brennstoffzellenstapel (10) nach einem der vorangehenden Ansprüche, aufweisend zumindest einen Sensor, der zum Erfassen einer von zumindest einem Spannelement (55) ausgeübten Zugkraft und/oder einer von der zumindest einen Torsionsfeder (80) ausgeübten Federkraft ausgebildet ist.

8. Brennstoffzellenstapel (10) nach den Ansprüchen 6 und 7, aufweisend zumindest eine mit dem zumindest einen Sensor verbundene und zum Betrieb des zumindest einen Elektromotors (70) ausgebildete Steuereinheit.

9. Brennstoffzellenstapel (10) nach einem der vorangehenden Ansprüche, wobei die erste Endplatte (51) und/oder die zweite Endplatte (52) segmentiert ausgebildet ist.

10. Fahrzeug mit einem Brennstoffzellenstapel (10) nach einem der Ansprüche 1 bis 9.


**Claims**

1. A fuel cell stack (10), comprising

   a first end plate (51) and a second end plate (52);
   a plurality of fuel cells (11) arranged between the end plates (51, 52);
   at least one elastic tensioning element (55) tensioned in the stack direction (S) between the end plates (51, 52); and
   at least one rotationally mounted mounting shaft (60),
   **characterized in that**

at least one end section (58) of at least one tensioning element (55) is fixed to the rotationally mounted mounting shaft (60), and the rotationally mounted mounting shaft (60) is connected via at least one tensioned torsion spring (80) to the fuel cell stack (10).

2. The fuel cell stack (10) according to claim 1, wherein the at least one mounting shaft (60) runs along one edge area of the first and/or second end plates (51, 52) and is connected with this end plate (51, 52) via the at least one tensioned torsion spring (80).

3. The fuel cell stack (10) according to claim 1 or 2,

   wherein the at least one mounting shaft (60) extends in sections inside an edge area of an end plate (51, 52), wherein the edge area has at least one recess (53) in which the mounting shaft (60) is exposed, and wherein at least one tensioning member (55) and at least one torsion spring (80) is connected in the recess (53) to the mounting shaft (60).

4. The fuel cell stack (10) according to any one of the preceding claims, wherein the spring force of the at least one torsion spring (80) is adjustable by rotation of the mounting shaft (60).

5. The fuel cell stack (10) according to any one of the preceding claims, wherein the at least one torsion spring (80) is designed as a coil spring, torsion rod spring or hollow machined spring (81).

6. The fuel cell stack (10) according to any one of the preceding claims, comprising at least one electric motor (70) designed for electromotive drive of the at least one mounting shaft (60).

7. The fuel cell stack (10) according to any one of the preceding claims, comprising at least one sensor, which is configured to detect a tensile force exerted by at least one tensioning element (55) and/or a spring force exerted by the at least one torsion spring (80).

8. The fuel cell stack (10) according to claims 6 and 7, comprising at least one control unit connected to the at least one sensor and configured to operate the at least one electric motor (70).

9. The fuel cell stack (10) according to any one of the preceding claims, wherein the first end plate (51) and/or the second end plate (52) is formed in segments.

10. A vehicle with a fuel cell stack (10) according to any one of claims 1 to 9.


**Revendications**

1. Empilement de piles à combustible (10), présentant

   une première plaque d'extrémité (51) et une seconde plaque d'extrémité (52) ;
   une pluralité de piles à combustible (11) disposées entre les plaques d'extrémité (51, 52) ;
   au moins un élément de serrage élastique (55) serré dans la direction d'empilement (S) entre les plaques d'extrémité (51, 52) ; et
   au moins un arbre de montage (60) monté de manière rotative,
   **caractérisé en ce qu'**
   au moins une section d'extrémité (58) d'au moins un élément de serrage (55) est fixée à l'arbre de montage rotatif (60) et l'arbre de montage rotatif (60) est relié à l'empilement de piles à combustible (10) via au moins un ressort de torsion tendu (80).

2. Empilement de piles à combustible (10) selon la revendication 1, dans lequel l'au moins un arbre de montage (60) s'étend le long d'une zone de bord de la première et/ou de la seconde plaque d'extrémité (51, 52) et est relié à cette plaque d'extrémité (51, 52) via l'au moins un ressort de torsion tendu (80).

3. Empilement de piles à combustible (10) selon la revendication 1 ou 2, dans lequel l'au moins un arbre de montage (60) s'étend par sections à l'intérieur d'une zone de bord d'une plaque d'extrémité (51, 52), dans lequel la zone de bord présente au moins une cavité (53) dans laquelle l'arbre de montage (60) est exposé, et

dans lequel au moins un élément de serrage (55) et au moins un ressort de torsion (80) sont reliés à l'arbre de montage (60) dans la cavité (53).

4.  Empilement de piles à combustible (10) selon l'une quelconque des revendications précédentes, dans lequel la force de ressort de l'au moins un ressort de torsion (80) est réglable par une rotation de l'arbre de montage (60).

5.  Empilement de piles à combustible (10) selon l'une quelconque des revendications précédentes, dans lequel l'au moins un ressort de torsion (80) est réalisé en tant que ressort hélicoïdal, barre de torsion ou ressort creux fraisé (81).

6.  Empilement de piles à combustible (10) selon l'une quelconque des revendications précédentes, présentant au moins un moteur électrique (70) réalisé pour un entraînement par moteur électrique de l'au moins un arbre de montage (60).

7.  Empilement de piles à combustible (10) selon l'une quelconque des revendications précédentes, présentant au moins un capteur qui est réalisé pour la détection d'au moins une force de traction exercée par un élément de serrage (55) et/ou d'une force de ressort exercée par l'au moins un ressort de torsion (80).

8.  Empilement de piles à combustible (10) selon les revendications 6 et 7, présentant au moins une unité de commande reliée à l'au moins un capteur et réalisée pour un entraînement de l'au moins un moteur électrique (70).

9.  Empilement de piles à combustible (10) selon l'une quelconque des revendications précédentes, dans lequel la première plaque d'extrémité (51) et/ou la seconde plaque d'extrémité (52) sont réalisées de manière segmentée.

10. Véhicule avec un empilement de piles à combustible (10) selon l'une quelconque des revendications 1 à 9.

FIG. 1

FIG. 2

FIG. 3

FIG. 4

FIG. 5

FIG. 6

FIG. 7

(A)                                                      (B)

FIG. 8

FIG. 9

FIG. 10

**IN DER BESCHREIBUNG AUFGEFÜHRTE DOKUMENTE**

**In der Beschreibung aufgeführte Patentdokumente**

- EP 1870952 A2
- DE 102012000266 A1
- WO 2012065890 A1
- DE 102008026858 A1
- US 2009280359 A1
- WO 2011098276 A1
- DE 102010007979 A1
- DE 102010007981 A1